# EUROPEAN PATENT APPLICATION

(11) **EP 4 620 655 A1**
(43) Date of publication of application: **24.09.2025**
(21) Application number: 24165257.7
(22) Date of filing: 21.03.2024
(51) Int. Cl.: B29C 64/124, B29C 64/223, B33Y 10/00, B29C 64/393, B33Y 50/02

(54) **METHOD FOR IMPROVING ADHESION OF 3D-PRINTED MICROSTRUCTURES**

(71) Applicant: Nederlandse Organisatie voor toegepast-natuurwetenschappelijk Onderzoek TNO, 2595 DA 's-Gravenhage (NL)
(72) Inventor: WALSH, Darragh Robert, 2595 DA 's-Gravenhage (NL); AKKERMAN, Hylke Broer, 2595 DA 's-Gravenhage (NL)
(74) Representative: V.O.

(57) **Abstract**

Method for printing 3D-microstructures (13), comprising the steps of providing a build platform (1) and a light source (2) arranged to provide light to a surface of the build platform, forming a first layer (3), and forming a second layer (8) on the first layer, wherein forming the second layer comprises the sub-step of projecting light from the light source in a second predetermined pattern (9) on a transparent foil (4), thereby further curing the partially cured resin forming the first layer and at least partially curing the uncured resin provided on the surface of the foil in accordance with the second predetermined pattern.

## Description

The invention relates to a method for improving adhesion of 3D-printed microstructures, a computer program product comprising instructions enabling a controller of an analysis system to perform said method and a 3D-microstrucutre printed using said method.

One of the earliest and widest adopted additive manufacturing processes is called 3D-stereolithography, commonly abbreviated as SLA. SLA is a type of 3D printing that uses a liquid resin that is cured, or hardened, layer by layer using an UV-laser or light source. SLA can be used to produce high-resolution prints and can be used in applications that require fine details such as the production of 3D-printed microstructures.

A specific type of SLA printing provides resin via a foil having a photosensitive layer of resin. The foil is provided on a surface of a build platform, after which light is projected on the resin, causing the resin to harden. Once the resin is hardened the foil is delaminated off, leaving the hardened resin behind as a layer. This process is then repeated for an additional layer, provided on top of the first layer, forming a 3D microstructure. An advantage of foil based SLA printing is that the foil can be conveniently moved out of the way during the printing process. This allows doing other processing steps, e.g. cleaning, providing of electronic components or depositing conductive ink into printed grooves.

SLA printing typically benefits from strong interlayer adhesion, due to molecular bonding between successive printed layers which are not in a fully cured state at the bonding surface. When the resin is provided via foil having a relatively high oxygen diffusion coefficient, which owing to oxygen inhibition and minimal crosslinking at the PDMS interface, prevents both complete curing of photopolymer bonding surfaces and adhesion of the current layer to the resin.

Therefore, a foil coating process has been developed that requires the use of foil with relatively low oxygen diffusion coefficients, preferably a flexible foil with some degree of optical transparency.

A disadvantage of using foils having a relatively low oxygen diffusion coefficient is that a high degree of curing happens at the foil interface, leading to both reduced adhesion between successive printed layers and a strong adhesion to the foil. This may be particularly problematic for microstructures such as micropillars and microwalls used frequently in 3D-printed microfluidic and microelectronic devices, resulting in increased prevalence of destruction of microstructures when delaminating the foil from the cured resin.

The invention aims to counteract the above disadvantages, preferably while retaining the advantages. More specifically, the invention aims to provide foil coated 3D printing with improved adhesion between successive layers.

To this end, the invention provides a method for printing 3D-microstructrures, in particular the method according to claim 1. The method comprises the steps of providing a build platform and a light source arranged to emit light towards a surface of the build platform, forming a first layer and a second layer. The build platform and the light source may be individually provided or as part of an existing 3D-printer setup. The light source is arranged such that effective curing of the provided resin is achieved once exposed to the light. In other words, the light source may be modified depending on the resin used. The build platform can be a flat table, or a stage arranged to move, for example in a direction perpendicular to the ground (Z-direction). This may facilitate the printing of 3D microstructures, for example by moving the build platform downward once a layer is provided such that the subsequent layer can be provided at a same relative height to the ground. The build platform may also be actuated to move in a plane parallel to the ground (X-Y plane), in order to facilitate aiming of the light source at a relevant position. Alternatively or additionally, the light may be translated in the X-Y plane and / or the Z-direction.

Forming the first layer comprises the sub-step of providing a transparent foil and uncured resin, wherein the uncured resin is provided on the surface of the foil. Transparent foil should be understood as a foil that has a relatively high light permeability, preferably a flexible foil with some degree of optical transparency. Foils that do not have such a high light permeability may block too much light, thereby hindering the curing of the resin. The uncured resin is provided on the foil and can be any material that can be cured by radiation via light. The uncured resin should stick to the foil and be sufficiently viscous such that it does not move relative to the foil during expected use of the foil during printing of the 3D-microstructure.

The next sub-step is projecting light from the light source in a first predetermined pattern on the transparent foil, thereby partially curing the uncured resin in accordance with the predetermined pattern. Such a predetermined pattern is a pattern that partially cures the resin, i.e. only a subsection of all the resin that is to be cured in the corresponding layer according to the design of the 3D-microstructure. The foil is delaminated from the partially cured resin, thereby forming the first layer. The first layer is only partially cured and is not cured before a second layer is provided on top of the first layer. The liquid resin, i.e. the uncured resin in the first layer, remains due to the high viscosity of the resin and potentially by capillary forces caused by the cured resin acting up on the uncured resin.

An example of a first predetermined pattern according to the invention is a pattern that cures the first layer, except for at least one predetermined spot, preferably a plurality of spots. These spots form holes or cavities within the first layer filled with uncured resin. Due to the capillary forces between the walls of the holes and the high viscosity of the resin, the uncured resin will remain in these cavities. Preferably, the cavities have a maximum depth of less than 1 mm.

Forming the second layer comprises the sub-step of providing a transparent foil, and uncured resin, wherein the uncured resin is provided on the surface of the foil. Preferably, the transparent foil and uncured resin are of the same material as used for the first layer. This may improve adhesion between the first and second layer. The next sub-step is projecting light from the light source in a second predetermined pattern on the transparent foil, thereby further curing the partially cured resin forming the first layer and thereby at least partially curing the uncured resin provided on the surface of the foil in accordance with the second pattern. The foil is delaminated from the partially cured resin, thereby forming the second layer. During curing, using light and the second predetermined pattern, not only the uncured resin of the second layer is cured but also a part of the remaining uncured resin of the first layer. Doing so increases the surface area and mechanical strength of interlayer crosslinking, while also dramatically increasing the potential number of interlayer crosslinks (e.g. cross links between the first and second layer).

The second predetermined example may be a pattern that partially cures the second layer, except for at least one cavity, preferably a plurality of cavities. In a preferred embodiment the cavities of the second layer are not aligned with the cavities in the first layer in the Z-direction, i.e. the direction perpendicular to the surface of the building platform. Having the cavities in the second layer offset in the X-Y plane relative to the cavities in the first layer, may facilitate curing of the cavities in the first layer.

The second predetermined pattern can be arranged to cure the uncured resin of the first layer. The second predetermined pattern may thus be arranged such that all the remaining uncured resin in the first layer is cured.

The first predetermined pattern may allow for curing of the first layer by the projected light such that the perimeter of a 3D-microstrure is cured and allows for a section of the first layer to remain uncured.

Forming the first layer may further comprise the sub-step of projecting light of the light source in a third predetermined pattern on the transparent foil. As a result, the partially cured resin is further partially cured in accordance with the third predetermined pattern such that a center section of the partially cured resin is cured. In addition, during forming of the second layer, the second predetermined pattern is arranged to cure the uncured resin of the first layer. Curing the first layer in three steps, using three different predetermined lighting patterns, may be advantageous as it may prevent overcuring of the second layer. Overcuring, in the context of the invention, should be understood as exposing the resin to too much light, resulting in the scattering of light within a given layer. This may result in undesirable growth of projected patterns in the X-Y plane and stiffen the resin. The resin may become overcured, diminishing the mechanical properties of the cured resin significantly.

The second predetermined pattern may be a negative of the first predetermined pattern. For example, the sections that were not exposed to the light in the first predetermined pattern are the only sections that are being exposed to the light in the second predetermined pattern.

The first and / or second layer can have a height of 100 µm or less. Printing a 3D-microstructure using relatively thin layers may give higher control in shaping the dimensions of the microstructures. Since the total height of a 3D-microstructure depends on the number of layers used, using a relatively thick layer limits the possibilities for the height of the microstructure.

The first predetermined pattern is provided such that between 1% and 99%,preferably between 15% and 85%, even more preferably between 25% and 75% of the first layer is cured after delaminating the foil from the partially cured resin.

Providing uncured areas, thereby forming cavities, in the first layer by radiating only parts of the uncured resin that will make up the first layer, is done in order to promote adhesive properties between the layers. This may be advantageous to prevent breaking of the 3D-microstructure when the foil is delaminated from the resin of the most recently provided layer. Thus, it stands to reason that sufficient cavities should be provided in order to provide sufficient adhesive properties. On the other hand, providing too many cavities may reduce mechanical and structural properties of the 3D-microstructure and may hinder curing of the resin. In general, it can be stated that when a resin is used that cures to a relatively stiff polymer, less adhesion cavities are needed. The position of the adhesion cavities relative to the microstructures' edge in the delamination direction may also be of importance. The microstructures may be particularly susceptible to breaking at the edge, due to the high bending moment at said edge, it may be important that the adhesion cavities are provided relatively close to the edge. This may be particularly important for less stiff photopolymers in a cured state as they can deform significantly over small length scales.

A digital filter is arranged to provide the first predetermined pattern, the second predetermined pattern and / or the third predetermined pattern. Using a digital filter allows for easy and accurate design of the various predetermined patterns. Such a digital filter may be provided by activating specific pixels of the light source. When switching between the predetermined patterns, a different set of pixels of the light source can be activated. Using a digital filter may thus also greatly improve speed of production, compared to physical filters that prevent all light from the light source from passing through.

In a second aspect of the invention, there is provided for a 3D-microstructure, preferably a 3D-microstructure printed according to the first aspect of the invention. The 3D-microstructure comprises a protrusion extending outward from a surface of the 3D-microstructure. The protrusion has a height of 100 µm or less. The 3D-microsctructure may be a microfluidic and/or microelectronic device, both commonly having microchannels in the sub-100 micrometer range. In particular, a 3D-microfluidic device benefits from being printed in according to the first aspect of the invention. For microfluidic devices, flow-related pressure during device operation is a common source of device failure. The walls, forming the microchannels, may be relatively weakly adhered to adjacent layers, which may result in fluid leakage once the microchannels are pressurized during operation. The improved adhesive properties between adjacent layers as a result from the disclosed method greatly reduce the chance of failure due to weak adherence between adjacent layers.

In a third aspect of the invention, there is provided for a computer program product comprising instructions which, when loaded into a memory of an analysis system associated with a 3D-printer system, enables a controller of the analyses system to perform the method according to the first aspect of the invention.

Further advantageous aspects of the invention are set out in the description and appended claims.

The technical features described in the paragraphs and sentences above can be isolated from the context, and the isolated technical features from the different paragraphs and sentences can be combined. Such combinations are herewith specifically disclosed in this description.

The invention will further be elucidated on the basis of exemplary embodiments which are represented in the drawings. The exemplary embodiments are given by way of non-limitative illustration of the invention.

In the drawings:
Figs. 1A-1C show a schematic cross-sectional sideview of an example of forming a first layer in accordance with the method for printing 3D-microstructures;
Figs. 2A-2C show a schematic cross-sectional sideview of an example of forming a second layer on top of the first layer formed in Figs. 1A-1C; and
Fig. 3A shows a schematic plan view of an example of a step of printing a 3D-microstructure;
Figs. 3B and 3C show a schematic cross-sectional sideview of a further example of forming channels of a 3D-microstructure of Fig. 3A along the A-A line; and
Figs. 4A-4D show a further schematic example of 3D-printing a microstructure.

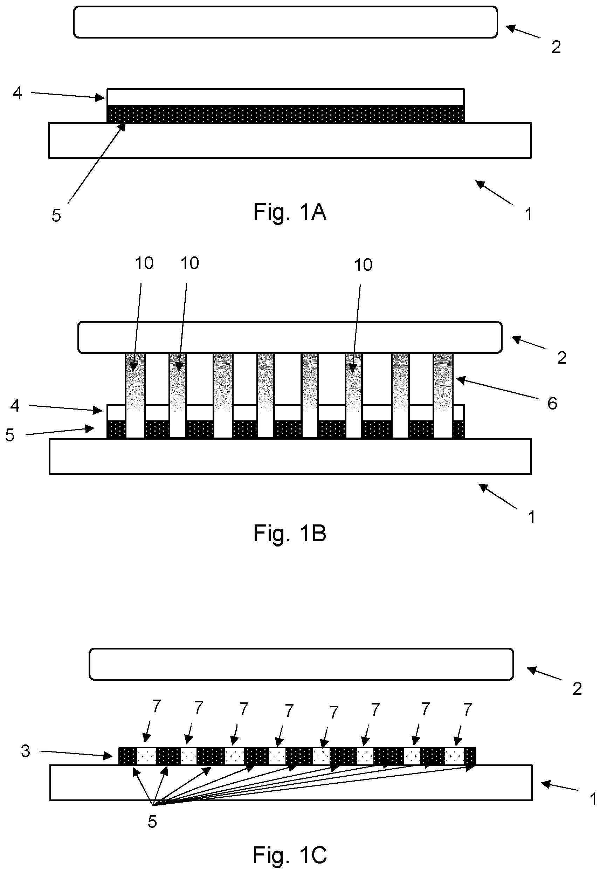

Turning to Figs. 1A-2C, various stages of printing of a 3D-microstructure have been shown. A build platform 1 has been provided, on which the microstructure 13 will be built, as well as a light source 2 that is arranged to provide light to the surface of the build platform 1. Turning to Figs. 1A-1C, a transparent foil 4 has been provided in order to form a first layer 3. Uncured resin 5 has been provided on the surface of the foil 4. In the example of Fig. 1A, the uncured resin 5 is provided on the build platform 1, such that the transparent foil 4 is provided in between the light source 2 and the uncured resin 5. The uncured resin 5 is a photopolymer, which cures when exposed to light. Thereto, the light source 2 is arranged to provide light. Fig. 1B shows how the-light is projected from the light source 2 in a first predetermined pattern 6 on the transparent foil 4. In the example, the first predetermined pattern 6 is represented by eight beams 10 of light, in which between no light is projected on the transparent foil 4. As a result, the uncured resin 5 is partially cured in accordance with the first predetermined pattern. Referring to Fig. 1C, the light source 2 no longer projects light and the foil 4 has been delaminated from the partially cured resin such that a first layer 3 is formed. As can be seen the partially cured resin comprises sections that have been exposed to the lighting, said sections being cured resin 7, and comprising sections that have not been exposed to the light and thus remain uncured resin 5.

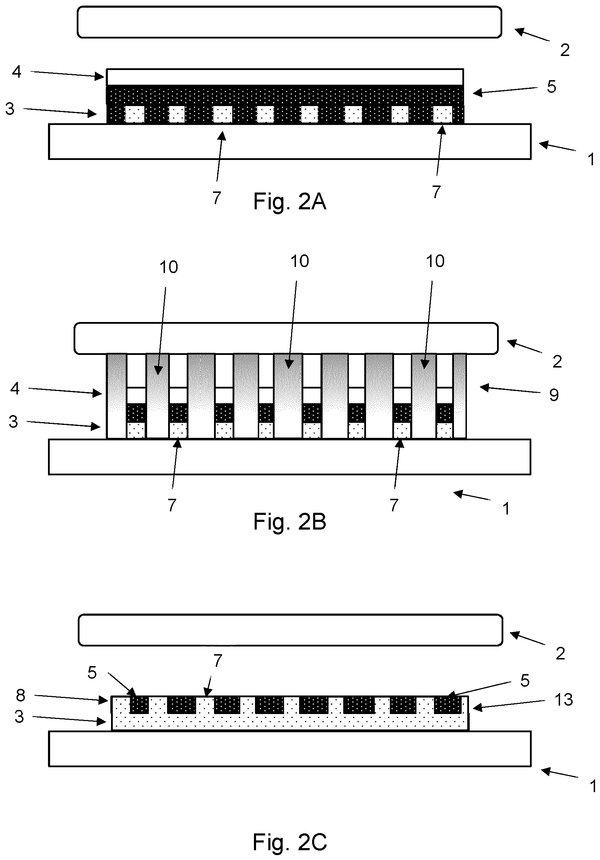

As an example of a next step, a second layer 8 is formed on the first layer 3 is shown in Fig. 2A. Again, a transparent foil 4 is provided having uncured resin 5 provided on the surface of the foil 4. The transparent foil 4 is located between the uncured resin 5 and the lighting source 2. A light is projected in a second predetermined pattern 9 from the light source 2 on the transparent foil 4. In the example, the second predetermined pattern 9 is represented by nine beams 10 of light, in which between no light is projected on the transparent foil 4. As can be seen, the second predetermined pattern 9 further cures the at least partially cured resin that forms the first layer 3. Specifically, the second predetermined pattern 9 is arranged to cure the remaining uncured resin 5 of the first layer 3. In addition, uncured resin 5 that will make up the second layer 8 is at least partially cured in accordance with the second predetermined pattern 9. As can be seen in Fig. 2C, the second predetermined pattern 9 is arranged such that the uncured resin 5 of the first layer 5 is now cured, i.e. there is no uncured resin 5 in the first layer 3 left. The foil 4 is delaminated from the partially cured resin 5, thereby forming the second layer 8. As can be seen in Fig. 2C, the second layer 8 is at least partially cured, while the cured resin 7 of the second layer 8 bonds to that of the cured resin 7 of the first layer 3.

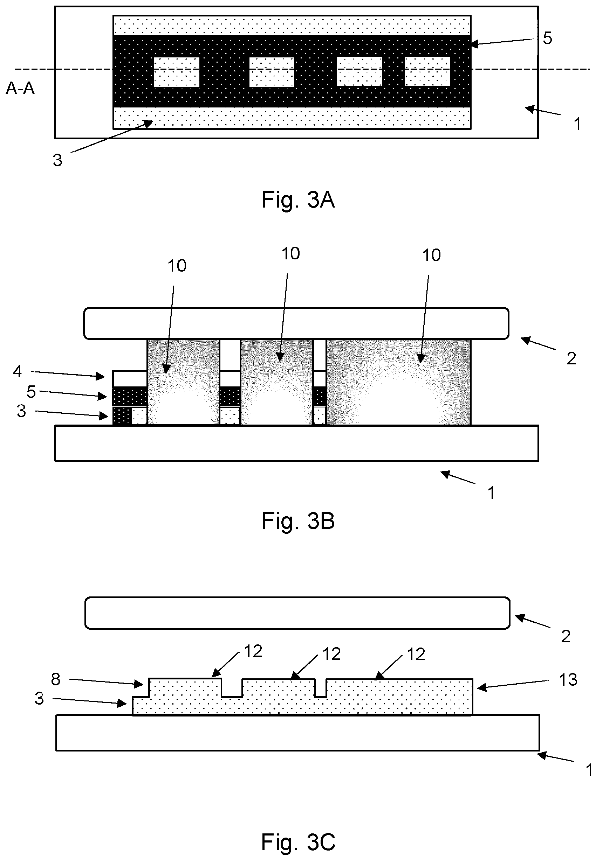

In another example of printing a 3D-microstructure, depicted in Figs. 3A-3C, the first predetermined pattern allowed for curing of the first layer 3 by the projected light such that the perimeter of a 3D-microstructure 13 is cured, and a section of the first layer 3 remains uncured. Afterwards, a third predetermined pattern was projected on the transparent foil 4, such that the partially cured resin was further partially cured. Specially, the further partially curing cured a center section of the partially cured resin. The resulting first layer 3 is shown in a top view in Fig. 3A. Referring to Fig. 3B, a cross-sectional side view of Fig. 3A, the second predetermined pattern 9 comprises 3 lighted beams 10. In Fig. 3C a finished 3D-microstructure 13 is shown, said microstructure 13 having walls 12. To ensure sufficient curing of the walls 12 without causing undesirable overcuring of resin adjacent to the critical structures, e.g. the walls 12, the third predetermined pattern was applied to a limited area of the microstructure 13. The first and second layer have a height of 100 µm, a smaller height may also be possible. As a result, the protrusion extending outward from the 3D-microstructre, in the shown example the wall 12, also has a height of 100 µm, while a smaller height may also be possible depending on the thickness of the uncured resin 5 provided on the foil 4.

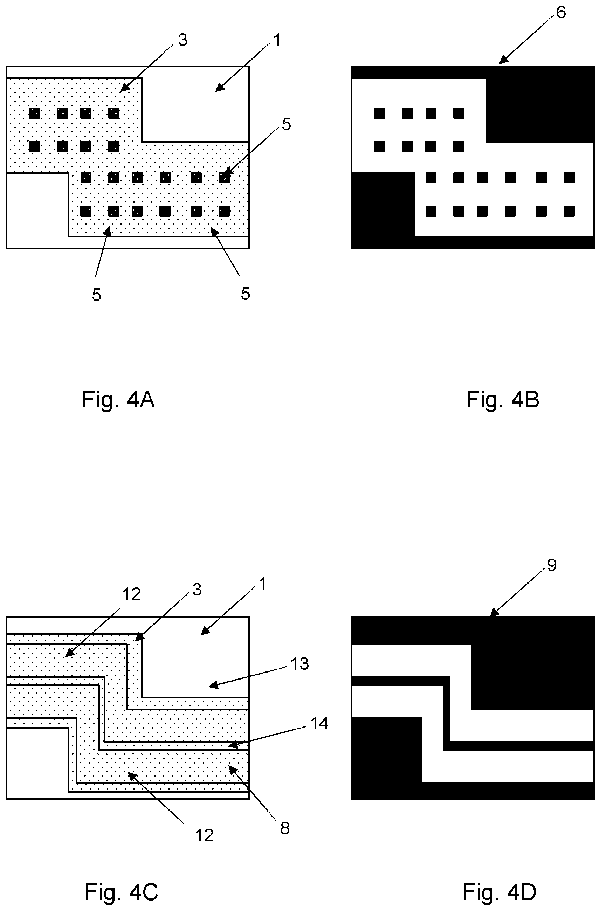

Turning to Figs. 4A-4D, a further example has been shown. In the example, a two layer microstructure 13 is printed on a build platform 1. Figs. 4A and 4C show two stages of the 3D-printing process according to an example of the invention, while Figs. 4B and 4D show the first and second predetermined pattern in which light is provided to the surface of the foil respectively in order to obtain two stages depicted in Figs. 4A and 4C. Specifically, the first predetermined pattern shown in Fig. 4B results in the first layer shown in Fig. 4A while the second predetermined pattern shown in Fig. 4D results in the combined first and second layer shown in Fig. 4C.

In order to print the example of the 3D-microstructure shown in Fig. 4C, a first layer needs to be formed 3. In accordance with the previous examples, a transparent foil (not depicted) having uncured resin provided on said foil is provided over building platform 1. Light is projected in the first predetermined pattern 6 on the transparent foil, thereby partially curing the uncured resin provided on the foil. The first predetermined pattern 6 is shown in Fig. 4B, wherein the white section shows where the light is projected by the light source on the transparent foil. On this section, the uncured resin is cured. The dark sections, on which no light is projected, remain uncured. After the resin has cured according to the pattern 6, the foil can be delaminated. The uncured resin that remains outside the perimeter of the 3D-microstructure can be removed, resulting in the formed first layer 3. In the first layer 3, sections of uncured resin remain 5. This process can now be repeated for the second layer 8. The second predetermined pattern 9 that is projected from the light source on the transparent foil is shown in Fig. 4D. Once the excess resin is removed, the two layer microstructure 13 of Fig. 4C has been produced. It can be seen that the microstructure 13 comprises walls 12 that form a channel 14 in which, for example, conducting material can be provided or can be used as a microfluidics channel. Due to the simultaneous curing of the second layer 8 and the purposefully uncured resin 5 of the first layer 3, the second layer 8 forming the walls 12 are firmly attached to the first layer 3. This reduces the chances of damaging the walls 12 during the delamination step during printing of the second layer 8, or when the channel 14 is pressurized during use, e.g. as a microfluidics channel.

Many variations will be apparent to the skilled person in the art. Such variations are understood to be comprised within the scope of the invention as defined in the appended claims. For example, various shapes can be employed when radiating the uncured resin in the first, second or third pattern.

## Claims

1. Method for printing 3D-microstructures, comprising the steps of:
- providing a build platform and a light source arranged to provide light to a surface of the build platform;
- forming a first layer, wherein forming the first layer comprises the sub-steps of:
- providing a transparent foil and uncured resin, said uncured resin provided on the surface of the foil;
- projecting light from the light source in a first predetermined pattern on the transparent foil, thereby partially curing the uncured resin in accordance with the first predetermined pattern;
- delaminating the foil from the partially cured resin, thereby forming the first layer;
- forming a second layer on the first layer, wherein forming the second layer comprises the sub-steps of:
- providing a transparent foil and uncured resin on the first layer, said uncured resin provided on the surface of the foil;
- projecting light from the light source in a second predetermined pattern on the transparent foil, thereby further curing the partially cured resin forming the first layer and at least partially curing the uncured resin provided on the surface of the foil in accordance with the second predetermined pattern;
- delaminating the foil from the partially cured resin, thereby forming the second layer.

2. Method for printing 3D-microstructures according to claim 1, wherein the second predetermined pattern is arranged to cure the uncured resin of the first layer.

3. Method for printing 3D-microstructures according to any of the preceding claims, wherein the first predetermined pattern allows for curing of the first layer by the projected light such that the perimeter of a 3D-microstructure is cured and allows for a section of the first layer to remain uncured.

4. Method for printing 3D-microstructures according to claim 3, wherein the step of forming the first layer further comprises the sub-step of:
- projecting light of the light source in a third predetermined pattern on the transparent foil, thereby further partially curing the partially cured resin in accordance with the third predetermined pattern such that a center section of the partially cured resin is cured; and
wherein the second predetermined pattern is arranged to cure the uncured resin of the first layer.

5. Method for printing 3D-microstructures according to claim 1 or 2, wherein the second predetermined pattern is a negative of the first predetermined pattern.

6. Method for printing 3D-microstructures according to any of the preceding claims, wherein the first and / or second layer have a height of 100 µm or less.

7. Method for printing 3D-microstructures according to any of the preceding claims, wherein the first predetermined pattern is provided such that between 1% and 99% of the first layer is cured after delaminating the foil from the partially cured resin.

8. Method for printing 3D-microstructures according to any of the preceding claims, wherein a digital filter is arranged to provide the first predetermined pattern, the second predetermined pattern, and / or the third predetermined pattern.

9. Method for printing 3D-microstructures according to any of the preceding claims, wherein the foil is a flexible foil with some degree of optical transparency.

10. 3D-microstructure, preferably a 3D-microstructure printed according to any of the preceding claims, comprising a protrusion extending outward from a surface of the 3D-microstructure, wherein the protrusion has a height of 100 µm or less.

11. Computer program product comprising instructions which, when loaded into a memory of an analysis system associated with a 3D-printer system, enables a controller of the analysis system to perform the method according to any of the claims 1-9.
